# EUROPEAN PATENT APPLICATION

(11) **EP 3 413 189 A1**
(43) Date of publication of application: **12.12.2018**
(21) Application number: 18275076.0
(22) Date of filing: 05.06.2018
(51) Int. Cl.: G06F 7/58, H04L 9/32

(54) **RANDOM NUMBER GENERATOR**

(30) Priority: 05.06.2017 GB 201708939
(71) Applicant: SigmaCorp OÜ, 10621 Tallinn (EE)
(72) Inventor: KREPKA, Mark Robert, 11913 Tallinn (EE)
(74) Representative: Shipp, Nicholas

(57) **Abstract**

A method of generating a seed for initialising a random number generator, the method comprising identifying a hash of a block of block chain; deriving a seed from at least a portion of the hash; and initialising a random number generator using the seed.

## Description

### Field

This disclosure relates to a system for and a method of generating a seed for initialising a random number generator.

### Background

The practical applications of random numbers are numerous and varied: from legal applications - where random numbers are used to randomise the selection of jury members and magistrates; to scientific situations - where random numbers are used to randomly sample data, for example. In short, random numbers are used whenever an unpredictable result is needed. For example, random numbers are used to model unpredictable phenomena such as signal noise, weather and nuclear fission. Further, random numbers are used in gaming and gambling applications to simulate unpredictable results such as the tossing of a coin, or the shuffling of a deck of cards, or the drawing of lottery numbers.

A known approach of generating random numbers is to use a computer program - that is, software - which generates apparently random numbers. Such programs are called pseudo random number generators. Pseudo random number generators generate sequences of pseudo random numbers. Though apparently random, the numbers are, instead, dictated by a seed value which is input to the random number generator. The seed is a comparably short initial value which is used to initialise the generator and, based on which, the generator will generate a particular sequence of pseudo random numbers. Since the sequence of pseudo random numbers generated is inextricably linked to the seed used, any sequence can be reproduced if the seed value is known.

A problem however with this known approach is that a third party cannot verify that a particular sequence of pseudo random numbers is random. Instead, the randomness of each sequence relies either on the integrity of the person using the random number generator, or the integrity of the particular computer program being used. Specifically, the randomness depends on the randomness of the value being used to seed the generator.

An alternative, known, approach of generating random numbers is to base numbers on physical phenomenon, such as signal noise, which are expected to be random. Such approaches result in truly random numbers. However, the problem of verifying the numbers as truly random still exists. This is because, by virtue of them being truly random, the numbers are - by definition - unrepeatable. Accordingly, a third party cannot verify the results as being random.

A problem with the known approaches of generating random and pseudo random numbers is therefore that the numbers generated are not verifiably random by third parties. In some cases, certain methods of generating random or pseudo random number generators are verified by third parties as being suitably random, however this does not guarantee that a particular number is random since the method may have been changed or tampered with since verification. The problem of verifying numbers as random is of particular importance in the gaming and gambling industries where it is important for players to be able to verify the randomness of the numbers being used to decide the outcomes of the games or deals in which they're participating.

### Summary

A method is disclosed of generating a seed for initialising a random number generator, the method comprising: identifying a hash of a block of block chain; deriving a seed from at least a portion of the hash; and initialising a random number generator using the seed.

The seed may be at least a portion of the at least a portion of the hash.

The seed may be derived from the at least a portion of the hash using a function. The seed may be derived from at least a portion of an output of the function. There may be at least one input to the function. There may be at least one output from the function. The function may perform an operation on the at least one input to derive the at least one output.

The step of deriving the seed may comprise inputting the at least a portion of the hash to the function. The step of deriving the seed may additionally comprise inputting a string to the function.

At least a portion of the output from the function may be at least a portion of the seed.

The function may be a one way function. The function may be a hash function. The hash function may be Secure Hash Algorithm 256 (SHA-256).

The output from the hash function may be a hash. The hash of the block may be a first hash. The output from the hash function may be a second hash. The seed may be the or a portion of the second hash.

The hash output from SHA - 256 may be a fixed size 256-bit hash.

The block may be the block most recently added to the block chain.

The string may be a nonce.

The method may further comprise the step of generating, using the random generator, one or more random numbers.

The one or more random numbers may be a sequence of random numbers.

The hash of the block, the nonce and the hash function may be provided to a third party. One or more of the hash of the block, the nonce and the hash function may be publically available. One or more of the hash of the block, the nonce and the hash function may be available from a source. One or more of the hash of the block, the nonce and the hash function may be published on the internet. One or more of the hash of the block, the nonce and the hash function may be communicated to the third party. The seed may be verifiably random by a third party.

The third party may be any person or computer system not involved in the generation of the seed. The third party may verify the randomness of the seed using a computer system.

The block may be any block of the block chain. The block chain may be ethereum block chain. The block chain may be any block chain that is of a distributed open nature.

The step of identifying a hash of a block of block chain may comprise identifying the newest block of the block chain and identifying the hash of that block. The step of identifying a hash of a block of block chain may comprise looking up the block chain in a memory.

The step of initialising the random number generator may comprise inputting the seed to the random number generator. The random number generator may generate one or more random numbers based on the seed. The one or more random numbers may be reproduced by inputting the same seed to the same random number generator.

A computer readable medium is disclosed comprising instructions executable by a processor to perform the method of generating a seed for initialising a random number generator.

A computer system for generating a seed for initialising a random number generator is disclosed, the system comprising: a processor; and a memory, wherein the memory comprises instructions executable by the processor to perform the method of generating a seed for initialising a random number generator.

The memory may additionally comprise instructions executable by the one or more processors to interact with a block chain. The instructions may be defined in client software. The client software may relate to the block chain.

The computer system may comprise one processor and the instructions may be executable by the one processor to perform the method of the first embodiment.

The system may comprise a plurality of processors and the instructions may be executable by the plurality of processors to perform the method of the first embodiment. Each of the steps of the method may be carried out by a different one of the processors. Some or all of the steps of the method may be carried out by the same one of the processors. The computer system may be a single unit or comprise multiple components, which may be distributed across a network.

The hash of the block may be a random string generated on demand by the block chain.

The seed may be an initial value for initialising the random number generator. The generator may generate a sequence of pseudo random numbers based on the seed. The seed may be pseudo random.

Block chain may be a digital public ledger. Transactions made in bitcoin may be recorded in the block chain, wherein bit coin is an online currency. Alternatively, block chain may be used to record transactions made in other cryptocurrencys.

A nonce is an arbitrary number. The nonce may be a 32-bit (4-byte) field.

A method of verifying that a seed for initialising a pseudo random number generator is pseudo random is disclosed, the method comprising: identifying a block of block chain; identifying a hash of the block of block chain; and attempting to derive the seed from at least a portion of the hash.

The block of block chain may be the block most recently added to the block chain.

The step of identifying the block of block chain may comprise receiving a message comprising an identification of the block.

The identification may be the hash of the block. The identification may be the time at which the block was created.

The step of identifying the block of block chain may comprise, when the block of block chain has failed to be identified, alerting a user that the block has not been identified.

The step of identifying the block of block chain may comprise, when the block of block chain has been successfully identified, alerting a user that the block has been identified.

The step of identifying the hash of the block of block chain may comprise retrieving data associated with the block of block chain. At least a portion of the data associated with the block may be data indicative of the hash of the block. The at least a portion of the data may be comprised in a header of the block.

The step of attempting to derive the seed from at least a portion of the hash may comprise attempting to derive the seed from the hash.

The method may further comprise, when the seed has failed to be derived, alerting a user that the seed is not derivable from the at least a portion of the hash.

The method may further comprise, when the seed has been successful derived, alerting a user that the seed is derivable from the at least a portion of the hash.

### Brief description of the drawings

Exemplary arrangements of the disclosure shall now be described with reference to the drawings in which:
Figure 1 is a block diagram which shows the relationship between blocks of block chain;
Figure 2 shows a computer system for implementing a method of generating a seed for initialising a random number generator; and
Figure 3 is a flow diagram illustrating the steps of the method.

Throughout this specification, like reference numerals refer to like parts.

### Detailed description

A method is set out in this section that utilises the verifiable random nature of components of block chain to derive a seed for a random number generator. In doing that, the seed inherits the block chain's inherent trustworthiness and randomness, which means that the pseudo random numbers generated from the seed do, too. In other words, by exploiting block chain to derive the seed, the verifiable random nature of block chain propagates through to the pseudo random numbers ultimately generated. In this way, sequences of provable pseudo random numbers are provided.

To aid the skilled person's understanding of the method and its advantages, a brief explanation of block chain and its verifiable random nature will first be given.

Block chain is an electronic, continuously growing and open distributed ledger that records transactions between parties in a verifiable and permanent way. Data about transactions is recorded in blocks of the block chain. The blocks are linked to form a chain of blocks - that is, to form the block chain. As an example, block chain is used as an open ledger for all transactions made in the online bitcoin currency. Usefully, block chain is inherently trustworthy because before a transaction is written to the block chain, the transaction is verified by the block chain community. This process of verification is called block chain mining and the process is carried out by so called block chain miners. When a miner successfully verifies and writes a transaction to the block chain, they are rewarded. In the case of bitcoin block chain, the successful miner is rewarded in bitcoin.

To successfully verify a transaction, a miner takes the transaction data and applies a one way function to it. The function turns the data into a seemingly random sequence of letters and numbers which is termed a hash. For the transaction data to be verified and written to the block chain, the hash must meet certain criteria. The criteria specify what the hash must look like and are set by the block chain protocol. In order to meet these criteria, the miner must vary the input to the function until the hash output is acceptable. The miner cannot however vary the transaction data - as this is fixed - and so a nonce is additionally input to the function with the transaction data. A nonce is a 32 bit string which is chosen by the miner and which is unrelated to the transaction data. The miner varies the nonce until the hash output from the function is acceptable. Once the hash is deemed acceptable, the transaction data and the hash are written to the block chain as a new block. The hash becomes the block header and subsequently is used as the unique identifier for that block. In this way, block chain has an inherent trustworthiness because the data stored in its blocks has to go through rigorous verification by the block chain community. Furthermore, as noted above, each hash is seemingly random and unique.

A further benefit of block chain is that it is immutable because the blocks of block chain are made cryptographically secure by providing a link between each block and the block immediately before it in the block chain. This is achieved by inputting the hash of the previous block to the function referred to above along with the transaction data and the nonce. This means that each block is inextricably linked with the block before it in the chain by its hash. As a result, not only would tampering with the data in a block cause the hash of that individual block to change - which would mark the block out as a fake - but the hashes of all of the subsequent blocks would change. In this way, the components of block chain are not just verifiably random, but they're secure, too.

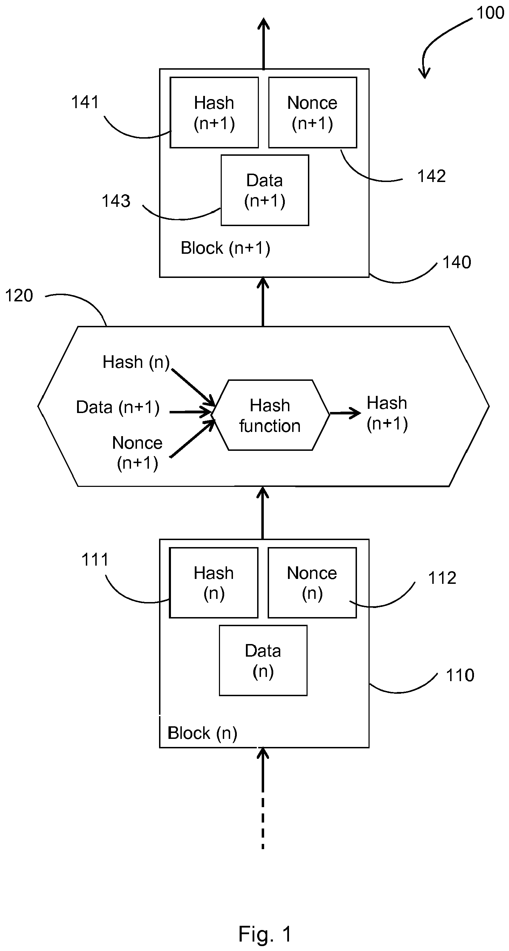

To summarise, a holistic overview of the creation and structure of a block of block chain will be described in reference to Figure 1. The hash for a new block 140 - which is to store data about a new transaction - is generated by applying a function 120, such as Secure Hash Algorithm 156 (SHA-256), to at least the hash 111 of the previous block 110; the transaction data 143 to be stored in the new block 140; and a nonce 142. As described above, the nonce 142 is varied by the successful miner until the hash 141, which is output from the function 156, meets the criteria set by the block chain protocol. Once the hash 141 meets the criteria, the nonce 142 arrived at by the miner, the transaction data 143 and the hash 141 are written to the block chain 100 in the form of new block 140.

As a result of the process described above, the components of block chain, and specifically the hashes of block chain, are considered to be of a pseudo random nature due to their generation by a hash function. This is because the hash function 156 turns its inputs - in this case, the hash 111, the transaction data 143 and the nonce 142 - into a seemingly random sequence 141 of letters and numbers.

Also as a result of the process described above, the hash 141 is verifiable. The reason the hash 141 is verifiable is because if a third party is told the hash function and the inputs, the third party can reproduce the output from the hash function - that is, the hash 141. This is because the hash function will always produce the same output for the same inputs.

The method provided of deriving a seed for a random number generator which exploits this verifiable random nature will now be described in more detail.

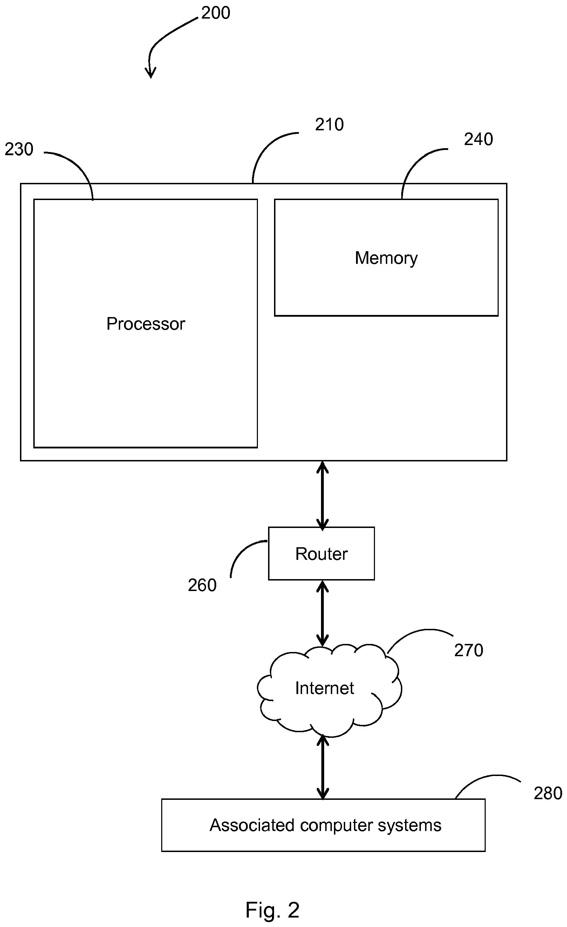

A computer system 200 for implementing the method is shown in Figure 2. The computer system 200 comprises a computer 210 which has a processor 230 and a memory 240, which are communicably coupled to one another. The processor 230 is arranged to execute instructions stored in the memory 240 to perform the method disclosed herein. More specifically, the memory 240 comprises instructions which are executable by the processor 240 to first identify a hash of a block chain. To do this, the processor 240 looks up the block last added to the block chain and identifies its hash by referring to a copy of block chain which is replicated in the memory 240. The reason the block chain is replicated locally in the member 240 is because of block chain's distributed nature, which means that rather than there being a master copy stored somewhere on a server, it is a peer-to-peer distributed database. Accordingly, the block chain is replicated at each computer system in the network. Consequently, the memory 140 additionally comprises instructions executable by the processor 240 to download data about the block chain and to download data about updates to the block chain, such as data about new blocks. Updates are pushed to the computer 210 by other computer systems 280, which are also in the block chain community, over the internet 270. The instructions for downloading data about the block chain are defined in block chain client software, which is downloaded to the computer 210 from the internet 270 via the router 260. The client software relates to a particular block chain. In this arrangement, the client software used is Bitcoin-Qt and the block chain is the bitcoin block chain. Once the processor 240 has looked up the block last added to the block chain in the memory 230, the processor 240 identifies the hash of the block. Next, it derives a seed from the hash in a manner which is described in more detail below. In short however, this involves applying a function to the hash. The function is additionally stored in the memory 240 and the processor 230 looks up the function and applies the function to the hash to derive the seed. Once the processor 240 has derived the seed, the processor 240 initialises a random number generator using the seed. The instructions for the random number generator are also comprised in the memory 240 and therefore the processor 140 looks up the instructions for the random number generator in the memory 240 and initialises it using the seed.

In some arrangements, the random number generator is a database engine and the database engine comprises an in-built function which is suitable for generating random numbers. A database engine is software which stores and retrieves data in a database. The database engine may be self-contained; or a part of a database management system.

In one example, the database engine runs in Visual Basic (VB) - a Microsoft programming environment - and the database engine comprises the in-built function RND (VB). RND (VB) is a publically downloadable function which can be used to return a random number.

In some arrangements, the block chain client is a NodeJS program of the block chain. As the skilled person will understand, NodeJS provides communication from peers to local computer(s). Also as the skilled person will understand, any block chain can be used.

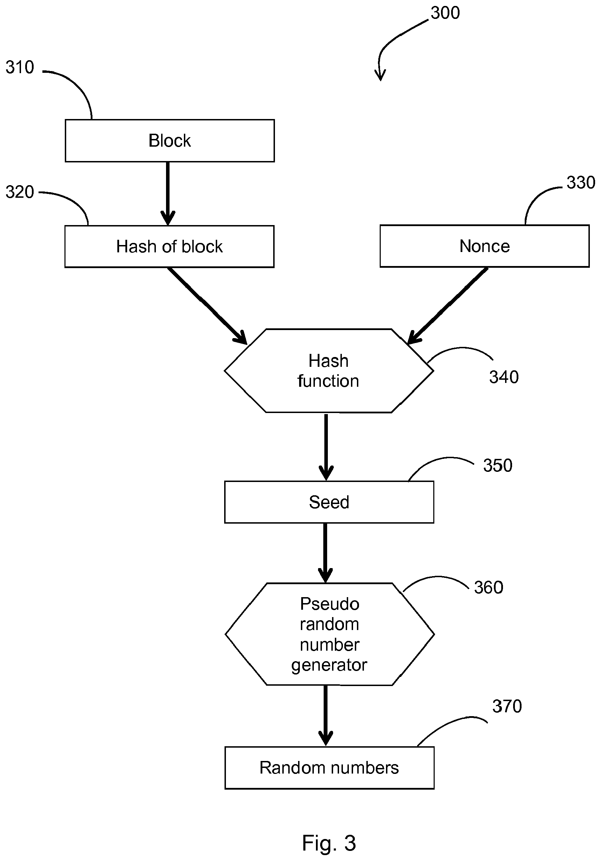

The steps of the method implemented on the computer system 200 of Figure 2 will now be described in more detail in reference to Figure 3. Figure 3 shows a flow chart of the steps of the method 300. Each step is represented by a rectangle or a hexagon. Steps represented by rectangles are steps involving the handling of data; steps represented by hexagons are steps involving the processing of data by a function.

At step 310, a block of the block chain is identified using the processor 230. In this case, the block identified is the block most recently added to the block chain. As described above, the block chain is replicated in the memory 240 of the computer 210 and the computer 210 receives updates from other users of the block chain whenever a new block is verified and added to the block chain.

At step 320, the hash of the block most recently added to the block chain is identified using the processor 230.

At step 330, a nonce is identified. In this case, the nonce is a 32 bit string which is chosen by a user of the computer 210 and which is input to the computer 210 by the user using a user interface (not shown). The nonce may be any value; however, by definition, the nonce may only be used once. Once input to the computer 210, the nonce is stored in the memory 240 of the computer 210 for future reference.

At step 340, the nonce and the hash of the block are input to a hash function. As described above, a hash function is a one way function. Usefully, because the hash function is a one way function, a user cannot derive the input from the output and the function. In this case, the hash function SHA-256 is used. The hash function SHA-256 is one of a family of cryptographic hash functions published by the National Institute of Standards and Technology (NIST) as a U.S. Federal Informational Processing Standard (FIPS). In particular, SHA-256 is a hash function which uses 32-bit words. The hash function SHA-256 is downloaded to the computer 210 from the internet 270 via the router 260. The instructions comprised in the hash function are stored in the memory 240 of the computer 210 and are executable by the processor 230 to perform the hash function. As the skilled person will understand, any other suitable hash function can be used. For example, Dagger-Hashimoto may be used instead of SHA-256. The hash function used may depend on the type of block chain being used. For example: SHA-256 may be used for bitcoin blockchain; whereas Dagger-Hashimoto may be used for Ethereum block chain.

At step 350, a hash is output from the hash function. In this case, the hash output from the hash function is termed a seed. This is because, at block 360, the hash output from the hash function is used as a seed for initialising a pseudo random number generator. The pseudo random number can be any type of pseudo random number generator which is initialised using a seed. As described above, the seed is used to set the starting point for the pseudo random number generator to generate a sequence of pseudo random numbers. The seed is, in itself, apparently random and accordingly it sets an apparently random starting point, and different sequence, for every seed value. The pseudo random number generator is defined in instructions comprised in the memory 240 of the computer 210 which, when executed by the processor 130, result in the generation of the sequence of random numbers based on the seed.

Advantageously, the hashing of the nonce and the hash of the block to derive the seed eliminates the possibility of a third party running a parallel system. Security is therefore improved. This is because, although the third party may know the hash of the block input to the hash function (as the block and its hash are publically accessible), the third party does not know the nonce input to the hash function. Therefore it is difficult for a computer robot program to arrive at the hash output from the hash function as there is at least one missing piece of information: the nonce. Security is therefore improved by the hashing of the nonce and the hash of the block to derive the seed.

Further advantageously, the nonce may be variable data which - in similarity with the hash - is verifiable. For example, the nonce may be data picked by a player in the game. This is discussed in more detail below. As a result of the nonce being verifiable, a player in the game (or indeed a third party) can verify all of the inputs to the hash function which are used to generate the seed. Ultimately this means that the player (or the third party) can verify the randomness of the ultimately generated pseudo random number. Accordingly, overall verifiability of the method 300 improved.

By way of example, where the method 300 is used in an online gambling game which uses a pseudo random number generated by the pseudo random number generator, the nonce may be derived from at least one player's 'click' time (that is, a time at which the at least one player makes a user input) and/or at least one player's pot value (that is, the value of the at least one player's online gambling account). Advantageously therefore, the player can verify that the pseudo random number used in their game is truly random by verifying: first, that the hash input to the hash function is indeed a hash of block chain; second, that the nonce is indeed derived from their clock time and/or pot value; and third that the output from the hash function is indeed linked to the seed used to initialise the random number generator. In this way, the player may confirm that a number used to determine an outcome, for example, in their game is suitably random, and has not been fixed by the game host, or the house in the case of an online gambling game, for example.

Yet further advantageously, where the method 300 is used in an online gambling game in which the nonce is variable data picked by the player, security is yet further improved. This is because the game host, or the house in the case of an online gambling game, is unable to arrive at the hash used to seed the random number generator as they do not know - and cannot necessarily derive - the nonce input to the hash function. Consequently, they cannot arrive at the hash output from the function, and thus they cannot arrive at the seed. In this way security is improved as the game host or the house cannot predict the pseudo random number used in the game.

Returning to the method 300, the output from the pseudo random number generator 360 is shown at step 370. As expected, the output is a sequence of pseudo random numbers.

The method 230 of generating a seed for initialising a random number generator is advantageous because the sequence of pseudo random numbers generated inherit the properties of the hash of the block of block chain input to the hash function and used to create the seed. That is, the sequence of random numbers generated inherits the provability, unpredictability and immutability of the hash.

The provability is provided by virtue of the block chain as a whole - and therefore the hash - being publically accessible. For example, any party may explore the block chain using an explorer such as https://etherscan.io/: the block chain explorer for ethereum. Such explorers may also allow a party to identify the block most recently added to the block chain. Alternatively or additionally, any party may explore the block chain using programmatical access to the block chain via an application programming interface (API), such as https://etherscan.io/apis.

Usefully, this means that the method 300 of generating a seed for initialising a random number generator may be verified by a third party. To do this, a third party - such as a player in a game - is provided with the hash of the block of block chain. Because the block chain is publically accessible, the third party is of course able to verify the hash as relating to an actual - and therefore trusted and accepted - block of block chain. The third party is also provided with the nonce and the hash function used to create the seed. The third party may be provided with this information via any suitable communication medium. Given this information, the third party is able to apply the hash function to the hash and the nonce and thus is able to derive the hash used as the seed to the pseudo random number generator. This is because the output of the hash function will always be the same for the same inputs to the function; and so the third party can regenerate the hash used as the seed. In this way, the third party can verify: firstly, that the inputs to the hash function are trustworthy; and secondly, that the seed used to initialise the random number generator is indeed a hash output from a hash function, and not a carefully selected (non-random) number. In this way, the third party can verify that the seed to the pseudo random number generator is a trustworthy random number.

Further advantageously, the third party can go one step further and verify the output of the pseudo random number generator by initialising the pseudo random number generator using the seed, which the third party has themselves derived and verified as being random. In this way, the third party can verify that the random number provided to them is verifiably random.

In some arrangements, the method of a third party verifying the random number provided to them is carried out using a computer system which is the same, or similar to, the computer system 200.

A further advantage of the method 300 is that the method is not reliant on any special hardware. Instead, the method may be carried out by any processor or group of processors provided with or provided with access to: the hash of the block of block chain; the nonce; the hash function; and the pseudo random number generator.

Another advantage of the method 300 is that the seed - that is, the output from the hash function - is unpredictable to a third party. This is because, in the case of bit coin block chain, for example, a new block is verified and added to the block chain approximately every 12 seconds; accordingly, there is a very low risk that a third party could predict which block of the block chain will be used to provide the input to the hash function. Furthermore, the nonce input to the hash function is unknown. Consequently, the third party knows neither of the inputs to the hash function. Further still, the third party does not know the exact hash function used. As a result, the sequence of random numbers generated is highly unpredictable. Thus, where required for security reasons, the method 300 results in the generation of a secure and unpredictable random number.

In another arrangement, the block of the block chain identified at step 310 is not the block most recently verified and added to the block chain; instead, the block identified can be any block of the block chain. Advantageously, this makes the seed more unpredictable because it makes it harder for a third party to predict which hash was input to the hash function.

As described above, in some arrangements, the seed is derived from the block hash. Alternatively, or additionally, the seed may be derived from a transaction hash within the block. Advantageously, in both cases, the seed is derived from a verified block, which may optionally be the most recently mined block.

In another arrangement, the seed used to initialise the pseudo random number generator is a portion of the hash output from the hash function. Advantageously, this again makes the seed unpredictable because a third party would have to use trial and error to determine which portion of the hash output from the hash function was used as a seed to initialise the pseudo random number generator.

In another arrangement, only a portion of the hash identified at step 320 is input to the hash function 340. For example, the game may be a gambling game, or any other game reliant upon random inputs. Advantageously, this again makes the seed more unpredictable because a third party would have to use trial and error to determine which portion of the hash was input to the function used to derive the seed. In this case, there may be a pre-hash function processing step which dissects the hash. The dissected portion may later be verified as being a part of the hash. Advantageously, this maintains the seed's verifiable properties.

In another arrangement, the hash identified at step 310 is the seed used to initialise the pseudo random number generator. In this arrangement, steps 330 and 340 of the method 300 are not carried out. Advantageously however, the seed still inherits the advantageous properties of the hash - that is, its uniqueness, randomness and trustworthiness. Further advantageously, the amount of processing carried out by processor 130 and the amount of memory 140 used is reduced. This is at because there are fewer steps of the method to execute, meaning that there are fewer instructions for the processor 230 to perform and for the memory 240 to store.

In another arrangement, the method 300 is used in a game. The game may be an online game hosted on a server. One or more players can participate in the game. In this arrangement, the nonce may be generated at the game start time. Alternatively, or additionally, the nonce may be equivalent to, or derived from, an input value created by a player or players of the game. In one example, the nonce is derived from, or equivalent to, the number of seconds past the minute that a player, or players, perform an action. The action may be at least one of: one or more players being added to the game; all of the players being added to the game; and/or one or more players clicking start. In another example where the method 300 is used in a game, the nonce is derived from a hash. In this example, a block chain transaction is created when the game is initiated. The transaction causes a coin or a token to be sent to another block chain wallet address. The transaction can be generated by a player of the game or by the game host. The coin or token is sent at substantially the same time as the transaction is created. As the skilled person will understand, the transaction will have a hash associated with it. In this example, the or a part of the hash is used as the nonce.

In some arrangements, instructions for executing the method 300 may be defined in software of the game host. Alternatively, or additionally, instructions for executing the method 300 may be defined in a software application that a third party, such as a vendor, creates.

In some arrangements, the method 300 is carried out as a separate process to the game. In some arrangements, the method 300 is carried out as a native process to the game. That is, as a native process to software that defines instructions for executing the game.

In a similar way as is described above, in some arrangements, the seed is derived from a part of the hash together with a random input from at least one player of the game at game start. Advantageously, the extra data in the form of the random input from the at least one player ensures that there is no way of a third party running a parallel system. The extra data can be derived from, for example, the seconds past the minute of the hour that the player clicks to start the game. Alternatively, or additionally, the extra data can be derived from the value in a pot belonging to the player and associated with the game. Alternatively, or additionally, the extra data can be derived from data across two or more players of the game. In such arrangements, the game host or vendor program may take a portion of the current block hash and the player or players may provide the extra data (or string) to input to the hashing function. The extra data may be the or a part of the nonce.

In another arrangement, the nonce is a time variant number which is generated by the processor 230 at the time in the method 300 at which it is required and the nonce is time stamped with the time at which it is generated.

In another arrangement, the nonce is a time variant nonce which is generated by the processor 230 at the time in the method 300 at which it is required and the nonce is time stamped with the time at which the block of the block chain from which the hash is sourced was verified and added to the block chain. Advantageously, this approach to generating the nonce links the nonce with the block of the block chain, which provides another layer of verifiability for a third party verifying a subsequently generated pseudo random number.

In another arrangement, the nonce is not a nonce. In an example, the number is chosen by a user of the method 300 and is input to the computer 210 via a user interface (not shown). In another example, the number is derived by the processor 230. In all examples, the number may, non-exclusively, be any valid combination of time variant, random, non-random and/or pseudo random.

In another arrangement, the hash function is substituted for any function capable of mapping at least a portion of a hash to an output, wherein the output is suitable for initialising the random number generator. For example, the hash function may be substituted for a two way logical mapping function. In a two way logical function, the input or inputs to the function may be derived from the output or outputs from the function and the function. In contrast, as previously discussed, in hash functions - which are inherently one way - the inputs cannot be derived from the outputs. In an example, the number of bits in the output is the same or larger than the number of bits required in the seed for initialising the random number generator.

The method and variations on the method disclosed herein may be implemented by a computer program product. The computer program product may include computer code arranged to instruct a computer to perform the functions of one or more of the various methods described above. The computer program product and/or the code for performing such methods may be provided to an apparatus, such as a computer, on a computer readable medium. The computer readable medium may be transitory or non-transitory. The computer readable medium could be, for example, an electronic, magnetic, optical, electromagnetic, infrared, or semiconductor system, or a propagation medium for data transmission, for example for downloading the code over the Internet. Alternatively, the computer readable medium could take the form of a physical computer readable medium such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

An apparatus, such as a computer, may be configured in accordance with such code to perform one or more processes in accordance with the various methods discussed herein.

Such an apparatus may take the form of a data processing system. Such a data processing system may be a distributed system. For example, such a data processing system may be distributed across a network.

In another arrangement, a computer readable medium comprising instructions executable by a processor to perform any one of the various methods disclosed herein is provided.

In another arrangement, the computer system for generating a seed for initialising a random number generator comprises one processor and the one processor is suitably sized to execute all of the instructions for performing the method steps disclosed herein.

In some arrangements, all steps of the method 300 are carried out locally on a host computer. Alternatively, software defining instructions for carrying out the steps of the method 300 can be hosted as a separate program on a separate computer to the host computer and which the host computer has network access to.

Where it is possible without apparent technical incompatibility, features of different arrangements, embodiments or aspects disclosed herein may be combined with some features optionally being omitted.

## Claims

1. A method of generating a seed for initialising a random number generator, the method comprising:
identifying a hash of a block of block chain;
deriving a seed from at least a portion of the hash; and
initialising a random number generator using the seed.

2. The method of claim 1, wherein the seed is at least a portion of the at least a portion of the hash.

3. The method of claim 1, wherein the seed is derived from the at least a portion of the hash using a function, wherein the seed is derived from at least a portion of an output of the function.

4. The method of claim 3, wherein deriving the seed comprises inputting the at least a portion of the hash to the function.

5. The method of claim 4, wherein a string is input to the function with the at least a portion of the hash, optionally wherein the string is a nonce.

6. The method of any of claims 3 to 5, wherein at least a portion of the output from the function is at least a portion of the seed.

7. The method of any of claims 3 to 6, wherein the function is a one way function.

8. The method of claim 7, wherein the function is a hash function.

9. The method of claim 8, wherein the hash of the block is a first hash and the output from the hash function is a second hash, optionally wherein the seed is at least a portion of the second hash.

10. The method of any of claims 3 to 9, wherein the inputs to the function and the function are communicated to a third party, optionally wherein the seed is verifiably random by the third party.

11. The method of any preceding claim, further comprising the step of:
generating, using the random generator, one or more random numbers, optionally wherein the one or more random numbers is a sequence of random numbers.

12. The method of any preceding claim, wherein the block chain is a block chain that is of a distributed open nature and/or wherein the block is the block most recently added to the block chain.

13. A computer readable medium comprising instructions executable by a processor to perform the method of any preceding claim.

14. A computer system for generating a seed for initialising a random number generator, the system comprising: one or more processors; and a memory, wherein the memory comprises instructions executable by the one or more processors to:
identify a hash of a block of block chain;
derive a seed from at least a portion of the hash; and
initialise a random number generator using the seed.

15. The computer system of claim 19, wherein the system comprises one processor or a plurality of processors.
